# EUROPEAN PATENT APPLICATION

(11) **EP 1 489 054 A1**
(43) Date of publication of application: **22.12.2004**
(21) Application number: 04014083.2
(22) Date of filing: 16.06.2004
(51) Int. Cl.: C03C 17/36

(54) **Solar control coating with metal alloy film**

(30) Priority: 17.06.2003 US 463740
(71) Applicant: PPG Industries Ohio, Inc., Cleveland, OH 44111 (US)
(72) Inventor: Arbab, Mehran, Pittsburgh, PA 15237 (US); Waynar, Thomas J., Freeport, PA 16229 (US); Finley, James J., Pittsburgh, PA 15238 (US)
(74) Representative: Sternagel, Fleischer, Godemeyer & Partner Patentanwälte

(57) **Abstract**

A solar control coating for applying to a substrate and having an infrared reflective layer sandwiched between a pair of transparent insulating layers, such as dielectric layers. The infrared reflective layer includes an alloy of a reflective metal where the alloying element oxidizes preferentially over the reflective metal.

## Description

### BACKGROUND OF THE INVENTION

### Field of the Invention

This invention relates generally to solar control coatings, more particularly to solar control coatings having a metal alloy infrared reflective film for coated transparent articles, and to the articles coated therewith.

### Description of the Currently Available Technology

The use of high transmittance, low emissivity coatings on glass panels for buildings, vehicles, and other structures is well known for controlling the amount of solar radiation passing through the panels. Low emissivity coatings allow short wavelength energy, e.g., visible, to pass through the coating but reflect long wavelength energy, e.g., infrared energy. Such coatings are attractive for architectural and vehicle use since they reduce the costs of heating and/or cooling and, hence, conserve energy.

These known coatings can include an infrared reflecting metal layer sandwiched between two dielectric layers of metal oxides that reduce the visible light reflectance. For example, U.S. Patent No. 4,898,790 discloses a multi-layered, high transmittance, low emissivity coating having a metallic silver film sandwiched between two zinc stannate films. U.S. Patent No. 4,898,789 discloses a multi-layered, high transmittance, low emissivity film having two infrared reflective metal films alternatingly combined with three metal oxide anti-reflective films. Examples of low emissivity coatings are found, for example, in U.S. Patent Nos. 4,952,423 and 4,504,109 and British reference GB 2,302,102.

The chemical durability of known coatings in part depends on the ability of the reflective metal in the infrared reflective film to resist oxidation. This oxidation of the reflective metal can occur, for example, during the coating process when a metal oxide layer is deposited over the reflective metal film, such as during a conventional magnetron sputter vapor deposition (MSVD) process. Such oxidation can be detrimental to the performance of the coating, e.g., increasing conductivity and/or decreasing transmittance. One solution for preventing oxidation of the reflective metal has been to include a sacrificial layer between the infrared reflective film and the overlying dielectric layer. The sacrificial layer generally is a metal, such as titanium, which oxidizes preferentially over the underlying reflective metal. However, the introduction of the sacrificial layer creates another processing step in producing a coating. Additionally, the sacrificial layer can affect the transmittance properties of the coated article.

Another coating with enhanced durability is described in U.S. Patent No. 5,763,063. The coating has a metal layer made up predominantly of silver and/or copper which can include minor amounts of gold or another noble metal. A protective bilayer is deposited over the metal layer. The protective bilayer has an outer layer of a mixed tin/indium based dielectric and an inner layer of a zinc and/or indium based dielectric. This protective bilayer adds to the cost of producing the coating. While these known coatings are adequate for conventional automotive and architectural use, it would be advantageous to provide a low emissivity or solar control coating that improves upon at least some of the characteristics of the known coatings. For example, it would be advantageous to provide a low emissivity coating that has acceptable durability while maintaining a desirable level of solar control activity with a minimum number of layers. It would also be advantageous to provide an infrared reflective layer over which an oxide layer can be deposited without the need for a separate sacrificial layer.

### SUMMARY OF THE INVENTION

This need is met by the multi-layered coating of the present invention. The coating can be applied to a substrate and can include at least three layers, such as a first transparent insulating layer (e.g. a dielectric layer) for depositing over the substrate, an infrared reflective layer deposited over the first dielectric layer, and a second transparent insulating layer (e.g. a dielectric layer) deposited over the infrared reflective layer. In the practice of the invention, the infrared reflective layer can comprise an alloy of a reflective metal and at least one alloying element. The first and second dielectric layers can each comprise at least one metal oxide, e.g., selected from oxides of zinc, titanium, aluminum, tin, silicon, yttrium, zirconium, niobium, bismuth, tungsten, and combinations or solid solutions thereof. In one embodiment, each of the first and second dielectric layers comprises an oxide containing zinc and the reflective metal comprises silver. The alloying element oxidizes preferentially over the reflective metal in the infrared reflective layer and, in one embodiment, can be selected from copper, gold, aluminum, titanium, zirconium, hafnium, and combinations thereof. In one nonlimiting particular embodiment, the alloy of the reflective layer can comprise 85 atomic percent silver and 15 atomic percent copper. The coating can have an emissivity of greater than or equal to 0.05 and a resistivity less than or equal to 20 Ω/square.

The coating can include a plurality of alternating layers of transparent insulating material and an infrared reflective material over the second transparent insulating layer. The coating can further include a protective coating over the uppermost layer of transparent insulating material.

The invention further includes a coated article including a substrate and a coating of the invention. The substrate can be coated by depositing a first dielectric layer over at least a portion of the substrate, depositing an infrared reflective layer comprising a metal alloy over the first dielectric layer, and depositing a second dielectric layer over the infrared reflective layer.

A complete understanding of the invention will be obtained from the following description when taken in connection with the accompanying drawing figures wherein like reference characters identify like parts throughout.

### BRIEF DESCRIPTION OF THE DRAWING

Fig. 1 is a sectional view (not to scale) of a coated article having a coating incorporating features of the invention; and
Fig.2 is sectional view (not to scale) of another coated article having a coating incorporating features of the invention.

### DESCRIPTION OF THE PREFERRED EMBODIMENTS

As used herein, spatial or directional terms, such as "inner", "outer", "left", "right", "up", "down", "horizontal", "vertical", and the like, relate to the invention as it is shown in the drawing figures. However, it is to be understood that the invention can assume various alternative orientations and, accordingly, such terms are not to be considered as limiting. Further, all numbers expressing dimensions, physical characteristics, and so forth, used in the specification and claims are to be understood as being modified in all instances by the term "about". Accordingly, unless indicated to the contrary, the numerical values set forth in the following specification and claims can vary depending upon the desired properties sought to be obtained by the present invention. At the very least, and not as an attempt to limit the application of the doctrine of equivalents to the scope of the claims, each numerical parameter should at least be construed in light of the number of reported significant digits and by applying ordinary rounding techniques. Moreover, all ranges disclosed herein are to be understood to encompass any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 7.6, or 3.1 to 8.7, or 5.5 to 10. Also, as used herein, the terms "deposited over", "applied over", or "provided over" mean deposited, applied, or provided on but not necessarily in contact with the surface. For example, a material "deposited over" a substrate does not preclude the presence of one or more other materials of the same or different composition located between the deposited material and the substrate. Additionally, any reference referred to as being "incorporated herein" is to be understood as being incorporated in its entirety.

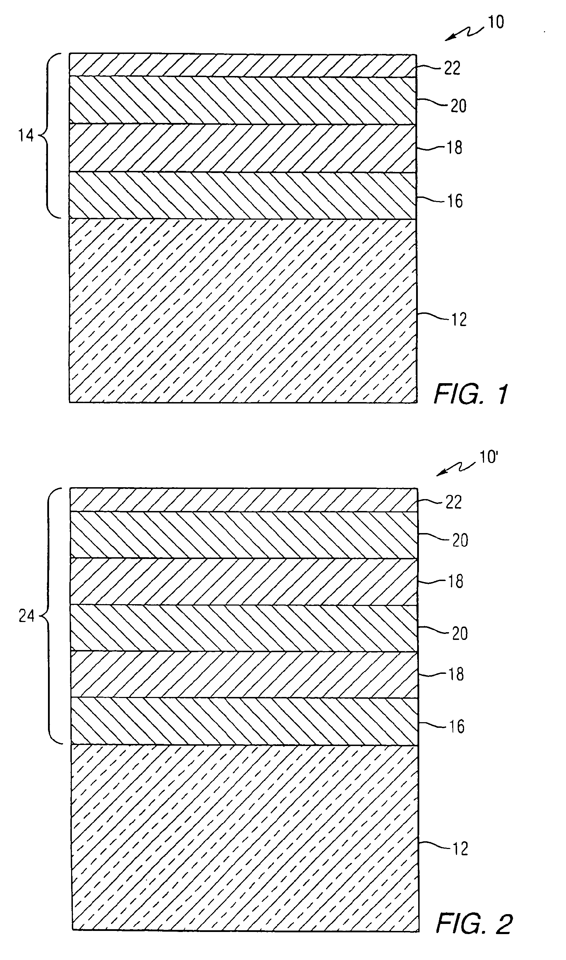

Fig. 1 illustrates a coated article 10 having a substrate 12 with a multi-layered coating stack or coating 14 of the invention deposited over the substrate 12. In the broad practice of the invention, the substrate 12 can be of any desired material having any desired optical characteristics. For example, the substrate 12 can be transparent to visible light. By "transparent" is meant having a transmittance through the substrate 12 of greater than 0% and up to 100%. By "visible light" is meant electromagnetic energy in the range of 390 nm to 800 nm. Alternatively, the substrate 12 can be translucent or opaque. By "translucent" is meant allowing electromagnetic energy (e.g., visible light) to pass through but diffusing it such that objects on the other side are not clearly visible. By "opaque" is meant having a visible light transmittance of 0%. Suitable nonlimiting examples of transparent materials include plastic (e.g., polymethylmethacrylate, polycarbonate, polyurethane, polyethyleneterephthalate (PET), or copolymers of any monomers for preparing these, or mixtures thereof), ceramic, or glass.

The glass can be of any type, such as conventional float glass or flat glass, and can be of any composition having any optical properties, e.g., any value of visible transmission, ultraviolet transmission, infrared transmission, and/or total solar energy transmission. By "float glass" is meant glass formed by a conventional float process in which molten glass is deposited onto a molten metal bath and controllably cooled to form a float glass ribbon. The ribbon is then cut and/or shaped and/or heat treated as desired. Examples of float glass processes are disclosed in U.S. Patent Nos. 4,466,562 and 4,671,155. The glass can be, for example, conventional soda-lime-silicate glass, borosilicate glass, or leaded glass. The glass can be "clear glass", i.e., non-tinted or non-colored glass. Alternatively, the glass can be tinted or otherwise colored glass. The glass can be untempered, heat treated, or heat strengthened glass. As used herein, the term "heat strengthened" means annealed, tempered, or at least partially tempered. Although not limiting to the invention, examples of glass suitable for the substrate 12 are described in U.S. Patent Nos. 4,746,347; 4,792,536; 5,240,886; 5,385,872; and 5,393,593, which are herein incorporated by reference. The substrate 12 can be of any desired dimensions, e.g., length, width, shape, or thickness. For conventional automotive transparencies, the substrate 12 can typically be up to 10 mm thick, e.g., 1 mm to 10 mm thick, e.g., less than 10 mm thick, e.g., 1 mm to 5 mm thick, e.g., 1.5 mm to 2.5 mm, e.g., 1.6 mm to 2.3 mm.

The coating 14 can modify one or more physical properties of the substrate on which it is deposited, e.g., optical, thermal, chemical or mechanical properties. As used herein, the terms "layer" or "film" refer to a coating region of a desired or selected coating composition. A "coating" or "coating stack" comprises one or more coating films or layers.

The coating 14 can be an electrically conductive coating, such as, for example, an electrically conductive coating used to make heatable windows as disclosed in U.S. Patent Nos. 5,653,903 and 5,028,759, or a single-film or multi-film coating used as an antenna. Likewise, the coating 14 can be a solar control coating. As used herein, the term "solar control coating" refers to a coating comprised of one or more layers or films which affect the solar properties of the coated article, such as but not limited to the amount of reflected, absorbed and/or transmitted radiation, for example, solar visible, infrared, or ultraviolet radiation incident on the coated article, and thermal radiation, e.g. room, temperature, emissivity, shading coefficient, etc. The solar control coating can absorb, reflect or transmit selected portions of the solar spectrum, such as but not limited to the IR, UV, and/or visible spectrums.

The coating 14 can be a low emissivity coating that allows visible wavelength energy, e.g., 400 nm to 800 nm, to be transmitted through the coating but reflects longer-wavelength solar infrared energy. By "low emissivity" is meant emissivity less than 0.4, such as less than 0.3, such as less than 0.2, such as less than 0.1, such as less than or equal to 0.05.

As shown in Fig. 1, the coating 14 can be a multi-layered coating or coating stack. In one non-limiting embodiment, the coating 14 includes a first transparent insulating layer 16 deposited over the substrate, an infrared reflective layer 18 deposited over the first transparent insulating layer 16, and a second transparent insulating layer 20 deposited over the infrared reflective layer 18. By transparent insulating layer it is meant a layer of a transparent non-conducting metal-containing material such as an anti-reflective dielectric material or a non-metallic transparent material. The layers 16 and 20 are referred to hereinafter as first and second dielectric layers, respectively, but this is not meant to be limiting.

A protective coating 22 can be deposited over at least a portion of the outer surface of the second dielectric layer 20, and in one nonlimiting embodiment a protective coating 22 can be deposited over the entire outer surface of the second dielectric layer 20. The protective coating 22 can be of any desired material. In one exemplary embodiment, the protective coating 22 can include one or more metal oxide materials, such as but not limited to, aluminum oxide, silicon oxide, or combinations thereof. For example, the protective coating can be in the range of 35 weight percent (wt.%) to 100 wt.% alumina and 65 wt.% to 0 wt.% silica, e.g., 70 wt.% to 90 wt.% alumina and 10 wt.% to 30 wt.% silica, e.g., 75 wt.% to 85 wt.% alumina and 15 wt.% to 25 wt.% of silica, e.g., 88 wt.% alumina and 12 wt.% silica, e.g., 65 wt.% to 75 wt.% alumina and 25 wt.% to 35 wt.% silica, e.g., 70 wt.% alumina and 30 wt.% silica. Other materials, such as aluminum, chromium, hafnium, yttrium, nickel, boron, phosphorous, titanium, zirconium, and oxides thereof, and combinations thereof, can be present to affect the refractive index of the protective coating 22. Used in this context, the term "combination" includes but is not limited to mixtures, alloys, and any other physical or chemical combination of one or more of these materials.

The compositions of the first and second dielectric layers 16 and 20 can be the same as each other or different from each other. The dielectric layers can comprise one or more films of dielectric materials or anti-reflective materials, such as metal oxides, oxides of metal alloys, nitrides, oxynitrides, or combinations thereof. The dielectric layers can be transparent or substantially transparent. Nonlimiting examples of suitable metal oxides for the dielectric layers include oxides of titanium, hafnium, aluminum, silicon, yttrium, tungsten, zirconium, niobium, zinc, bismuth, lead, indium, tin, or combinations thereof. These metal oxides can have small amounts of other materials, such as manganese in bismuth oxide, indium in tin oxide, etc. Additionally, oxides of metal alloys or metal mixtures, such as but not limited to oxides containing zinc and tin (e.g., zinc stannate), oxides of indium-tin alloys, silicon nitrides, silicon aluminum nitrides, or aluminum nitrides, can be used. Further, doped metal oxides, such as antimony or indium doped tin oxides or nickel or boron doped silicon oxides can be used. The dielectric layers can be substantially single phase films, such as a metal alloy oxide films, e.g., zinc stannate, or can be combinations of phases composed of zinc and tin oxides or can be composed of a plurality of metal oxide films, such as those disclosed in U.S. Patent Nos. 5,821,001; 4,898,789; and 4,898,790, which are herein incorporated by reference in their entirety.

In one nonlimiting embodiment, the dielectric layers 16 and 20 are composed of zinc oxide. The first and second dielectric layers 16 and 20 can each have a total thickness of less than or equal to 500 Å, e.g., less than or equal to 300 Å, e.g., less than or equal to 280 Å. For example, the metal oxide films 16 and 20 can have a thickness in the range of 100 Å to 500 Å, such as 150 Å to 400 Å, e.g., 200 Å to 250 Å. The infrared reflective layer 18 is composed of a reflective metal, e.g., a noble metal, such as but not limited to silver, and can be alloyed with another metal or alloying element such as but not limited to copper, gold, aluminum, titanium, zirconium, and combinations thereof. The other metal or alloying element can preferentially segregate to the surface of the layer 18 or render the alloy more resistant to oxidation. The alloying element or elements can exhibit greater diffusivity than the reflective metal. By "greater diffusivity" is meant that the alloying element has a greater likelihood to diffuse and segregate to the exposed surface of the infrared reflective layer 18 and a form a barrier to the degradation, for example by oxidation, of the alloy in the infrared reflective layer 18 during the deposition of the overlying layer 20 that is usually deposited in a reactive plasma atmosphere. In one nonlimiting embodiment, the reflective metal is gold and the alloying element is copper. Suitable ranges for the concentration of the alloying element in the infrared reflective layer 18 are 5-30 atomic %, such as 10-25 atomic %, e.g., 15 atomic %. The reflective layer 18 can have a thickness in the range of 50 Å to 250 Å, such as 75 Å to 150 Å, e.g., 100 Å.

Fig. 2 shows a coated article 10' having a coating 24 deposited on substrate 12. Coating 24 is similar to coating 14 but includes additional alternating layers 20 (or 16) and 18 of transparent insulating material and infrared reflective material, respectively. A protective coating 22 can be deposited over the uppermost layer of transparent insulating material. Additional alternating layers of transparent insulating layer 20 (or 16) and infrared reflective layer 18 (not shown) may be included within the coating 24.
The solar control coatings 14 and 24 of the invention can be deposited over the substrate 12 by any conventional method, such as but not limited to spray pyrolysis, chemical vapor deposition (CVD), electron beam evaporation, or magnetron sputter vapor deposition (MSVD). In one embodiment, the coating 14 is deposited by MSVD. Examples of MSVD coating devices and methods will be well understood by one of ordinary skill in the art and are described, for example, in U.S. Patent Nos. 4,379,040; 4,861,669; 4,898,789; 4,898,790; 4,900,633; 4,920,006; 4,938,857; 5,328,768; and 5,492,750. In the MSVD method, an oxide of a metal or metal alloy can be deposited by sputtering a metal or metal alloy containing cathode in an oxygen containing atmosphere to deposit a metal oxide or metal alloy oxide film on the surface of the substrate. Illustrating the invention is the following examples, which, however, are not to be considered as limiting the invention to its details. All parts and percentages in the following example, as well as throughout the specification are atomic percentages unless otherwise indicated.

### EXAMPLES

Coatings were prepared and applied over 2.3 mm thick common soda lime glass substrates as shown in Table 1. Example 1 illustrates a coating of the present invention having no conventional primer layer. Example 2 includes a metal alloy IR reflective layer of the invention with a primer layer. The Comparative Example is of a conventional coating stack that does not incorporate a primer layer. In each of the Examples, the zinc oxide layers were deposited by mid-frequency, bipolar, pulsed dial magnetron reactive sputtering of Zn in an Airco ILS 1600 MSVD coater. Glass substrates were introduced into the coater having an oxygen reactive oxygen/argon atmosphere. A zinc cathode was sputtered to produce a zinc oxide layer (first dielectric layer). For the IR reflective layer, a silver-copper alloy (15 atomic percent copper) layer was deposited by sputtering a silver-copper alloy target in an argon atmosphere. The titanium and silver layers were deposited by sputtering titanium and silver targets in an argon atmosphere. The coatings produced were tested for resistivity, emissivity, and scattered light haze. Mechanical durability (abrasion resistance) was tested by rubbing the samples with a pencil eraser immediately after coating the substrates and noting any visible change in the appearance of the samples.

**Table 1**

| Example | Coating | Resistivity Ω/sq. | Emissivity | Haze | Abrasion Resistance |
|---|---|---|---|---|---|
| 1 | glass/ZnO/Ag-Cu/ZnO | 9.8 | 0.134 | B | Good |
| 2 | glass/ZnO/AgCu/Ti/ZnO | 6.34 | 0.10 | B | Good |
| Comparative | glass/ZnO/Ag/ZnO | ∞ | 0.91 | C+ | Poor |

The data of Table 1 demonstrates that sputtering a ZnO layer over a silver layer without the use of a titanium sacrificial layer (Comparative Example) exhibits unacceptable (negligible) resistivity. The coating of Example 1 utilizing a silver-copper layer (even without the conventional primer layer) exhibits acceptable resistivity, emissivity, haze, and abrasion resistance. In Example 2, the addition of titanium sacrificial layer to the coating of Example 1 minimally enhanced the resistivity and emissivity. The resistivity of the coatings of the present invention can be less than about 20 Ω/sq. While some exemplary embodiments and uses of the present invention have been described above, it will be readily appreciated by those skilled in the art that modifications can be made to the invention without departing from the concepts disclosed in the foregoing description. Accordingly, the particular embodiments described in detail herein are illustrative only and are not limiting to the scope of the invention, which is to be given the full breadth of the appended claims and any and all equivalents thereof.

It will be readily appreciated by those skilled in the art that modifications may be made to the invention without departing from the concepts disclosed in the foregoing description. Such modifications are to be considered as included within the following claims unless the claims, by their language, expressly state otherwise. Accordingly, the particular embodiments described in detail herein are illustrative only and are not limiting to the scope of the invention which is to be given the full breadth of the appended claims and any and all equivalents thereof.

## Claims

1. A multi-layered coating, comprising a set of layers:
a first transparent insulating layer;
an infrared reflective layer deposited over the first transparent insulating layer, the infrared reflective layer comprising an alloy of a reflective metal and at least one alloying element; and
a second transparent insulating layer deposited over the infrared reflective layer.

2. The coating of claim 1 wherein each of the first and second transparent insulating layers comprises a dielectric layer.

3. The coating of claim 2 wherein each of the dielectric layers comprises at least one metal oxide selected from oxides of zinc, titanium, aluminum, tin, silicon, yttrium, zirconium, niobium, bismuth, tungsten, and combinations thereof.

4. The coating of claim 2 wherein each of the first and second dielectric layers comprises an oxide of zinc.

5. The coating of any of the preceding claims, wherein the reflective metal comprises silver.

6. The coating of claim 5, wherein the alloying element oxidizes preferentially over the silver in the infrared reflective layer.

7. The coating of claim 6, wherein the alloying element is selected from copper, gold, aluminum, titanium, zirconium, hafnium, and combinations thereof.

8. The coating of claim 7, wherein the alloying element is copper.

9. The coating of claim 8, wherein the alloy comprises 85 atomic percent silver and 15 atomic percent copper.

10. The coating of any of the preceding claims, wherein the emissivity of the coating is greater than or equal to 0.05.

11. The coating of any of the preceding claims, wherein the resistivity of the coating is less than or equal to 20 Ω/square.

12. The coating of any of the preceding claims further comprising a second infrared reflective layer deposited over the second transparent insulating layer and a third transparent insulating layer deposited over the second infrared reflective layer, wherein the second infrared reflective layer comprises an alloy of a reflective metal and at least one alloying element.

13. The coating of any of claims 1-11 further comprising a plurality of alternating layers of an infrared reflective material and of a transparent insulating material, the plurality of alternating layers being deposited over the second transparent insulating layer, wherein the infrared reflective material comprises an alloy of a reflective metal and at least one alloying element.

14. The coating of any of the preceding claims further comprising a protective layer as uppermost layer.

15. A coated article, comprising a substrate and a coating according to any of claims 1-14 deposited over the substrate.

16. A method of coating a substrate, comprising the steps of:
depositing a coating according to any of claims 1-14 over at least a portion of a substrate.
